# EUROPÄISCHE PATENTSCHRIFT

(11) **EP 2 827 077 B1**
(45) Veröffentlichungstag und Bekanntmachung des Hinweises auf die Patenterteilung: **13.02.2019**
(21) Anmeldenummer: 14176940.6
(22) Anmeldetag: 14.07.2014
(51) Int. Cl.: F24H 1/18, F28D 20/00, F24H 1/20

(54) **Warmwasserspeicher**
Hot water tank
Accumulateur d'eau chaude

(30) Priorität: 18.07.2013 DE 102013214156
(43) Veröffentlichungstag der Anmeldung: 21.01.2015
(73) Patentinhaber: BSH Hausgeräte GmbH, 81739 München (DE)
(72) Erfinder: Burghardt, Stefan, 83253 Rimsting (DE); Mayer, Gebhard, 83278 Traunstein (DE); Radl, Mathias, 83374 Oderberg (DE)
(74) Vertreter: Bee, Joachim

(56) Entgegenhaltungen:
- EP-A1- 1 000 575
- DE-C- 704 311
- DE-C2- 3 724 068
- DE-U- 1 969 259
- DE-U1-202007 006 907
- GB-A- 2 271 835
- GB-A- 2 316 474
- GB-A- 2 431 461

## Beschreibung

Die Erfindung betrifft einen Warmwasserspeicher für den häuslichen Gebrauch nach dem Oberbegriff des Patentanspruchs 1, wobei der Warmwasserspeicher einen Wassertank zur Aufnahme von zu erwärmenden Wasser und einen unelastischen Ausgleichsbehälter zur Aufnahme einer Wassermenge hat, die sich beim Zapfstopp in einer am Auslauf angeschlossenen Armatur befindet.

Bei einem drucklosen Warmwasserspeicher mit einem Wassertank zur Aufnahme von zu erwärmenden Wasser befindet sich ein armaturseitiges Sperrventil im Zulauf des Wassertanks. Auslaufseitig ist kein derartiges Ventil vorgesehen. Somit ist der Auslauf des Wassertanks zur Außenumgebung hin offen, wodurch beim Erwärmen des Wassers im Wassertank eine Ausdehnungsmenge über den Auslauf aus dem Wassertank austreten kann. Hierdurch entsteht ein stetiges Tropfen, was zu einem erhöhten Wasserverbrauch und Energieverbauch führt.

Das Dokument GB 2 316 474 A zeigt einen Wassererhitzer mit einem Warmwasserspeicher mit den Merkmalen des Oberbegriffs des Anspruchs 1. Aus der DE 37 240 68 C2 ist ein Warmwasserspeicher für den häuslichen Gebrauch bekannt, der zur Vermeidung eines Tropfstopps einen elastischen Ausgleichsbehälter mit einem variablen Volumen hat, der über eine Wasserstrahlpumpe mit einem Wassertank in Fluidverbindung steht. Der Ausgleichsbehälter wird von einer wasseraufnehmenden und wasserabgebenden Gummiblase gebildet, die von einem festen Gehäuse umgeben ist. Zur Be- und Entlüftung eines Zwischenraums zwischen der Gummiblase und dem Gehäuse zur Außenumgebung ist in einer Gehäusewandung eine Luftdruck-Ausgleichsöffnung ausgebildet. Die Wasserstrahlpumpe ist unterhalb eines Wasserspiegels angeordnet, der sich im Zulauf einstellt. Beim Öffnen des Zulaufs wird durch das in den Wassertank einströmende Kaltwasser Warmwasser aus dem Wassertank über einen Auslauf verdrängt. Gleichzeitig wird mittels der Wasserstrahlpumpe die Gummiblase leergesaugt und fällt in sich zusammen. Beim Zapfstopp strömt Wasser zurück in die Gummiblase. Dehnt sich dann das im Wassertank befindende Kaltwasser beim Erwärmen aus, steigt es in eine an dem Auslauf angeschlossene Armatur auf, ohne aus dieser herauszutropfen. Das Aufsteigen des sich erwärmenden Kaltwassers in den Wasserauslauf führt jedoch zu einer verstärkten Verkalkung einer warmwasserauskaufseitigen Armaturleitung. Nachteilig ist weiterhin, dass die Gummiblase einer Ermüdung unterliegt und über die Luftdruck-Ausgleichsöffnung zur Außenumgebung Verunreinigungen und Feuchtigkeit in den Zwischenraum eindringen können. Ein derartiger Warmwasserspeicher ist daher wartungsintensiv und störanfällig.

In der DE 10 2005 062 660 A1 ist ein Warmwasserspeicher für den häuslichen Gebrauch mit einem Tropfstopp gezeigt, der einen doppelwandigen Ausgleichsbehälter mit einem variablen Volumen aufweist, dessen Außenwandung unelastisch und dessen Innenwandung elastisch ausgebildet ist. Dieser Warmwasserspeicher basiert auf der Bereitstellung eines Ausgleichsbehälters, dessen maximales Volumen einer Ausdehnungswassermenge entspricht. Hierdurch wird die beim Erwärmen im Wassertank verdrängte Wassermenge bzw. Ausdehnungswassermenge vom Ausgleichsbehälter aufgenommen. Die Innenwandung wird von einer dehnbaren Membran gebildet, die im Zusammenwirken mit der unelastischen Außenwandung das variable Volumen definiert. Beim Zapfen strömt Kaltwasser in den Wassertank ein, wobei der Ausgleichsbehälter mittels einer Wasserstrahlpumpe leergesaugt wird und über ein Ventil Luft aus der Außenumgebung in den Innenraum der Membran einströmt. Beim Zapfstopp strömt Kaltwasser aus dem Wassertank zurück in den Zwischenraum. Um beim Zapfstopf eine Rückströmung aus einer am Auslauf angeschlossenen Warmwasserarmatur in den Wassertank zu verhindern, ist im Auslauf ein Rückschlagventil angeordnet. Nachteilig an diesem Warmwasserspeicher ist unteren anderem die einer Ermüdung unterliegende Membran. Zudem sind neben der Membran weitere Regelungselemente wie Rückschlagventile vorgesehen, die ein hohes Verkalkungsrisiko und somit Störrisiko aufweisen. Ein derartiger Warmwasserspeicher ist daher ebenfalls wartungsintensiv und störanfällig.

Aus der DE 20 2011 106 403 U1 ist ein Warmwasserspeicher für den häuslichen Gebrauch mit einem Tropfstopp bekannt, der einen unelastischen Ausgleichsbehälter mit einem nicht-variablen Volumen hat. Der unelastischen Ausgleichsbehälter steht über eine Öffnung mit einem Wassertank in Fluidverbindung und ist über eine Öffnung zur Außenumgebung des Warmwasserspeichers druckausgeglichen. Nachteilig an dieser Lösung ist die Öffnung zur Außenumgebung, wodurch Verunreinigungen in den Ausgleichsbehälter und in den Wassertank eindringen können.

Aufgabe der Erfindung ist es einen Warmwasserspeicher zu schaffen, der die vorgenannten Nachteile beseitig und einen zuverlässigen Tropfstopp ermöglicht.

Diese Aufgabe wird gelöst durch einen Warmwasserspeicher mit den Merkmalen des Patentanspruchs 1. Vorteilhafte Aus- und Weiterbildungen, welche einzeln oder in Kombination miteinander eingesetzt werden können, sind Gegenstand der abhängigen Ansprüche.

Ein erfindungsgemäßer Warmwasserspeicher für den häuslichen Gebrauch hat einen Wassertank zur Aufnahme von zu erwärmenden Wasser und einen unelastischen Ausgleichsbehälter zur Aufnahme einer Wassermenge, die sich beim Zapfstopp in einer am Auslauf angeschlossenen Armatur befindet. Erfindungsgemäß ist der Ausgleichsbehälter gegenüber einer Außenumgebung des Wasserspeichers hermetisch abgeschlossen und steht mit einer zulaufseitigen Wasserstrahlpumpe in Fluidverbindung, wobei der Ausgleichsbehälter zusätzlich zur auslaufseitigen Wassermenge eine Wassermenge aufnimmt, die einer beim Erwärmen des Kaltwassers im Wassertank entstehenden Ausdehnungsmenge entspricht.

Durch den hermetischen Abschluss zur Speicheraußenumgebung in Kombination mit der Wasserstrahlpumpe und der unelastischen bzw. formstabilen Ausbildung mit einem somit nicht-variablen Volumen wird im Ausgleichsbehälter ein Unterdruck erzeugt, mittels dem beim Zapfstopp Wasser aus dem Wassertank schnell in den Ausgleichsbehälter eingesaugt wird. Beim Zapfen hingegen wird der Ausgleichsbehälter vollständig bzw. nahezu vollständig leergesaugt. Dabei wird durch den entstehenden Unterdruck derart viel Wasser aus dem Ausgleichsbehälter aus- bzw. eingesaugt, dass ebenfalls eine Wassermenge eingesaugt wird, die einer sich beim Erwärmen des Wassers ergebenden Ausdehnungsmenge entspricht. Die Ausdehnungsmenge wird somit vor dem Erwärmen des Kaltwassers dem Wassertank entnommen. Zusätzliche Regel- bzw. Steuerelemente wie Rückschlageventile im Auslauf oder Druckentlastungsöffnungen bzw. Ventile im Ausgleichsbehälter sind nicht notwendig, um ein Steigen in einer Warmwasserarmatur zu verhindern. Zudem unterliegt der Ausgleichsbehälter keiner ständigen Formänderung. Insbesondere wird eine Verkalkung stark herabgesetzt, da nur wenig Geräteteile notwendig sind und die auslaufseitige Armaturleitung beim Zapfstopp leerläuft und somit selbst nicht verkalken kann. Zudem wird durch die hermetische Abdichtung zur Außenumgebung ein Eindringen von Verunreinigungen in den Wassertank verhindert. Der erfindungsgemäße Warmwasserspeicher zeichnet sich daher durch einen teilereduzierten, störunanfälligen und wartungsarmen Aufbau und somit durch einen verlässlichen Tropfstopp aus. Des Weiteren wird durch den Tropfstopp eine Energiereduzierung und eine Reduzierung des Wasserverbrauchs erzielt.

Bevorzugterweise steht der Ausgleichsbehälter über eine bodennahe bzw. bodenseitige Verbindungsöffnung mit der Wasserstahlpumpe in Wirkverbindung. Durch die Anordnung der Verbindungsöffnung in einer Bodenwandung des Ausgleichsbehälters bzw. im Seitenwandungsbereich nahe einer Bodenwandung wird sichergestellt, dass der Ausgleichsbehälter vollständig bzw. nahezu vollständig leergesaugt wird, so dass eine im Ausgleichsbehälter eventuell verbleibende Restmenge minimal ist und der Ausgleichsbehälter trotz seines nicht-variablen Volumens, das die Aufnahme der auslaufseitigen bzw. warmwasserarmaturseitigen Wassermenge und einer der Ausdehnungsmenge entsprechenden Wassermenge ermöglicht, kleine Abmaße hat bzw. kompakt ist.

Um eine Durchflussmenge zu ermöglichen, die über die Durchflussmenge der Wasserstrahlpumpe hinausgeht, ist parallel zur Wasserstrahlpumpe ein Bypassventil geschaltet, das in Kombination mit der Wasserstrahlpumpe einen Zulaufquerschnitt definiert. Ab einer voreingestellten Durchflussmenge öffnet das Bypassventil und das Kaltwasser fließt nicht nur über die Wasserstrahlpumpe in den Wassertank ein. Die Voreinstellung der Durchflussmenge erfolgt bevorzugterweise herstellerseitig, beispielsweise über die Vorgabe einer Ventilfeder und einer Ventilkörperfläche eines über die Ventilfeder in Schließrichtung vorgespannten Ventilkörpers.

Um die Einhaltung einer jeweiligen Zapftemperatur zu gewährleisten, ist bevorzugterweise ein Auslauf deckenseitig am Wassertank ausgebildet und das Kaltwasser strömt bodennah in den Wassertank ein Hierdurch wird eine Durchmischung des Warmwassers mit dem Kaltwasser beim Zapfen verhindert.

Um eine schnelle Erwärmung des in den Wassertank einströmenden Kaltwassers zu erreichen, ist es vorteilhaft, wenn eine Heizeinrichtung ebenfalls bodennah angeordnet ist.

Bevorzugterweise strömt die auslaufseitige Wassermenge und die ausdehnungsbezogene Wassermenge bodennah aus dem Wassertank zum Ausgleichbehälter. Hierdurch wird verhindert, dass Warmwasser mit einer Soll-Temperatur aus dem Wassertank in den Ausgleichsbehälter einströmt.

Der Aufbau des Warmwasserspeichers lässt sich weiter vereinfachen, wenn das in den Wassertank einströmende Kaltwasser, die auslaufseitige Wassermenge und die ausdehnungsbezogene Wassermenge durch die gleiche Fluidöffnung mit dem Wassertank kommunizieren.

Die Erfindung eignet sich insbesondere zur Bereitstellung eines drucklosen Warmwasserspeichers für den häuslichen Gebrauch bzw. der Hausgerätetechnik, der bei einem vorrichtungstechnisch einfachen, störunanfälligen und wartungsarmen Betrieb einen verlässlichen Tropfstopp ermöglicht.

Im Folgenden wird ein bevorzugtes Ausführungsbeispiel der Erfindung anhand von stark vereinfachten schematischen Darstellungen näher erläutert. Es zeigen
- Figur 1: ein Vertikalschnitt durch ein Ausführungsbeispiel eines erfindungsgemäßen Warmwasserspeichers mit leerem Wassertank und leerem Ausgleichsbehälter,
- Figur 2: der Warmwasserspeicher aus Figur 1 nach einer Erstinbetriebnahme, und
- Figur 3: der Warmwasserspeicher aus Figur 1 während eines Zapfvorgangs.

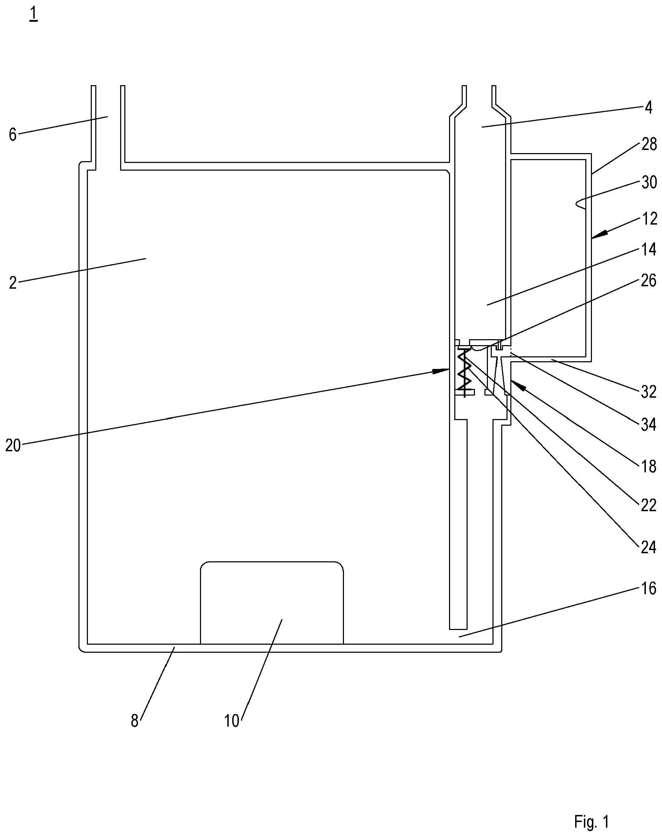

In Figur 1 ist ein Vertikalschnitt durch ein Ausführungsbeispiel eines erfindungsgemäßen drucklosen Warmwasserspeichers 1 für den häuslichen Gebrauch in Einbaulage gezeigt. Das hier gezeigte Ausführungsbeispiel ist in Untertischbauweise ausgeführt. Es liegt aber im Ermessen des Fachmanns, die Untertischbauweise auf einen Warmwasserspeicher in Übertischbauweise zu übertragen.

Gemäß dem Vertikalschnitt hat der Warmwasserspeicher 1 einen Wassertank 2 zur Aufnahme einer zu erwärmenden Wassermenge, einen oberen bzw. deckenseitigen Zulauf 4 zum Zuführen von Kaltwasser in den Wassertank 2, einen oberen Auslauf 6 zur Entnahme von Warmwasser und eine untere im Bereich einer Bodenwandung 8 angeordneten Heizeinrichtung 10 zum Erwärmen des Kaltwassers. Zudem hat der Warmwasserspeicher 1 einen Ausgleichsbehälter 12 zur Aufnahme einer während eines Zapfstopps aus einer an dem Auslauf 6 angeschlossenen nicht gezeigten armaturseitigen Warmwasserzapfleitung und zur Aufnahme einer Wassermenge, die einer Ausdehnungsmenge beim Erwärmen des Kaltwassers im Wassertank entspricht.

Der Zulauf 4 mündet in einen Zulaufkanal 14, der sich vertikal in Richtung der Bodenwandung 8 erstreckt und über eine seitliche bodennahe Fluidöffnung 16 zum Wassertank 2 geöffnet ist. Somit strömt das Kaltwasser bodenseitig und in diesem Ausführungsbeispiel auch im Bereich der Heizeinrichtung 10 in den Wassertank 2 ein, wohingegen das Warmwasser deckenseitig aus dem Wassertank 2 entnommen wird. Der Zulaufkanal 14 hat zwei Kanalabschnitte, wobei in seinem oberen und hier durchmesserverbreiterten Kanalabschnitt eine Wasserstrahlpumpe 18 und ein Bypassventil 20 nebeneinander angeordnet sind. Die Wasserstrahlpumpe 18 und das Bypassventil 208 sind parallel geschaltet und definieren einen Zuflussquerschnitt für das in den Wassertank 2 einströmende Kaltwasser.

Die Wasserstrahlpumpe 18 ermöglicht die Erzeugung eines Unterdrucks im Ausgleichsbehälter 12. Das Bypassventil 20 hat einen Ventilkörper 22, der mittels einer Ventilfeder 24 gegen einen Ventilsitz 26 in Schließrichtung vorgespannt ist. Sobald vom Verbraucher eine Durchflussmenge gefordert wird, die größer als eine durch die Wasserstrahlpumpe 18 maximal strömende Durchflussmenge ist, wird die Ventilfederkraft überwunden und das Bypassventil 20 öffnet, so dass dann auch über das Bypassventil 20 Kaltwasser in den Wassertank 2 einströmt.

Der Ausgleichsbehälter 12 hat ein unelastisches bzw. formstabiles Gehäuse 28 und einen von dem Gehäuse 28 begrenzten nicht-variablen Innenraum 30 und somit ein nichtvariables Volumen. Der Innenraum 30 ist gegenüber einer den Warmwasserspeicher 1 umgebenden Außenumgebung hermetisch abgeschlossen. Er steht lediglich über eine im Bereich seiner Bodenwand 32 angeordneten seitlichen bodennahen Verbindungsöffnung 34 im Bereich der Wasserstrahlpumpe 18 mit dem Wassertank 2 in Fluidverbindung. Der Innenraum 30 bzw. sein Volumen ermöglicht die Aufnahme einer Wassermenge, die sich beim Zapfstopp in der angeschlossenen Warmwasserzapfleitung befindet und zusätzlich zur auslaufseitigen Wassermenge die Aufnahme eine Wassermenge erlaubt, die einer beim Erwärmen des Kaltwassers im Wassertank 2 entstehenden Ausdehnungsmenge entspricht und somit zumindest gleich dieser ist.

Im Folgenden wird die Funktionsweise des erfindungsgemäßen Warmwasserspeichers 1 anhand von den Figuren 1, 2 und 3 beschrieben: Bei der Erstinbetriebnahme, also nach der Montage des Warmwasserspeichers 1 an einer Armatur, sind der Warmwassertank 2 und der Ausgleichsbehälter 12 leer bzw. nicht mit Wasser gefüllt (Figur 1). Beim Öffnen des Zulaufs strömt Kaltwasser über den Zulauf 4, den Zulaufkanal 14 und die Fluidöffnung 16 bodenseitig in den Wassertank 2 ein und der Ausgleichsbehälter 12 wird über die Wasserstrahlpumpe 18 in Kombination mit der Verbindungsöffnung 34 evakuiert. Sobald das Kaltwasser an der am Auslauf 6 angeschlossenen armaturseitigen Warmwasserzapfleitung austritt, wird der Zulauf manuell geschlossen, da ist dies ein Zeichen dafür ist, dass der Wassertank 1 und somit auch der Zulaufkanal 14 mit Kaltwasser befüllt ist. Aufgrund des Unterdrucks im Ausgleichsbehälter 12 wird nach dem Zapfstopp eine in der Warmwasserleitung aufgestiegende Wassermenge über die Verbindungsöffnung 34 in den Ausgleichsbehälter 12 gesaugt. Die Warmwasserleitung läuft quasi in Richtung des Wassertanks 2 leer. Zusätzlich wird durch den Unterdruck über die Verbindungsöffnung 34 eine Wassermenge bzw. ausdehnungsbezogene Wassermenge in den Ausgleichsbehälter 12 gesaugt, die einer beim Erwärmen des Kaltwassers im Wassertank 2 entstehenden Ausdehnungsmenge entspricht. Die Ausdehnungsmenge wird somit vor dem Erwärmen des Kaltwassers dem Wassertank 1 entnommen. Über die Fluidöffnung 16 strömt dabei das Kaltwasser aus dem Wassertank 2 in Richtung der Verbindungsöffnung 34 nach.

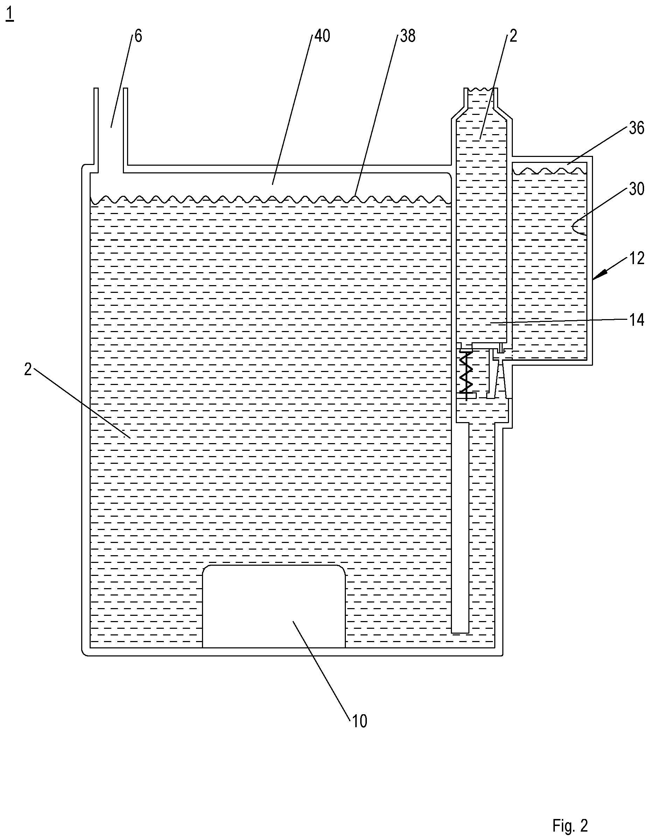

Wie in Figur 2 gezeigt, ist als Ergebnis der Erstinbetriebnahme der Innenraum 30 des Ausgleichsbehälters 12 bis auf einen oberen luftgefüllten Innenraumbereich 36 mit Kaltwasser befüllt, der Auslauf 6 vom Wasser befreit und oberhalb eines vom Kaltwasser im Wassertank 2 gebildeten maximalen Füllstandspiegels 38 ist ein Luftraum 40 zur Aufnahme der Ausdehnungsmenge gebildet. Die Luft in dem Luftraum 40 wird dabei über den Auslauf 6 aus der Außenumgebung eingesaugt. Zudem sind der Zulaufkanal 14 und der Zulauf 2 vollständig mit dem Kaltwasser befüllt.

Bei einer nun folgenden Erwärmung des Kaltwassers mittels der Heizeinrichtung 10, dehnt sich dieses aus und füllt den Luftraum 40 mit der Ausdehnungsmenge. Der Füllstandspiegel 38 steigt und die sich im Luftraum 40 befindende Luft wird über den Auslauf 6 zurück in die Außenumgebung abgegeben. Die Ausdehnungsmenge besetzt quasi den Luftraum 40, steigt jedoch nicht in den Auslauf 6 empor. Nach der Erwärmung ist der Warmwasserspeicher 1 betriebsbereit.

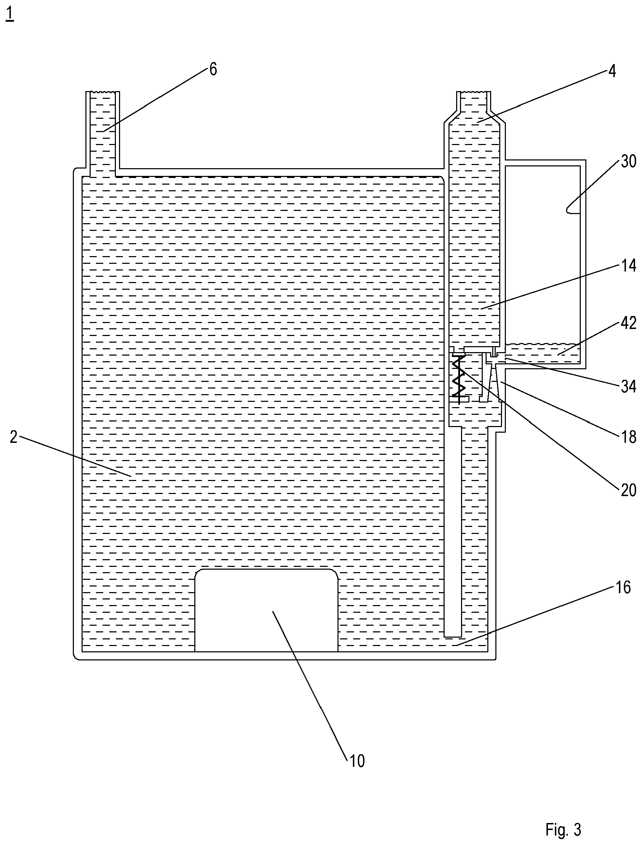

Wie in Figur 3 illustriert, strömt beim Zapfen Kaltwasser über den Zulauf 4 und insbesondere über den Zulaufkanal 14 bodenseitig durch die Fluidöffnung 16 in den Wassertank 2 ein und verdrängt dabei das Warmwasser im Wassertank 2 aus dem Auslauf 6. Der Ausgleichsbehälter 12 wird in Abhängigkeit von der Zapfmenge über die Wasserstrahlpumpe 18 und die Verbindungsöffnung 34 leergesaugt bzw. nahezu leergesaugt, so dass beispielsweise wie hier dargestellt nahezu der gesamte Innenraum 30 evakuiert ist und lediglich eine Restmenge 42 an Kaltwasser in dem Ausgleichsbehälter 12 verbleibt.

Je nach der geforderten Durchflussmenge strömt das Kaltwasser im Zulaufkanal 14 nur durch die Wasserstrahlpumpe 18 oder das Bypassventil 20 öffnet zusätzlich, so dass in dem Fall, in dem sich das Bypassventil 20 öffnet, parallel zur Wasserstrahlpumpe 18 das Kaltwasser über das geöffnete Bypassventil 20 in den Wassertank 2 einfließt.

Wenn nun der Zapfvorgang beendet ist, wird wie bei der Erstinbetriebnahme durch den Unterdruck im Ausgleichsbehälter 12 die Wassermenge in den Ausgleichsbehälter 12 gesaugt, die sich in der Warmwasserzapfleitung am Auslauf 6 befindet. Folglich läuft die Warmwasserzapfleitung leer. Zusätzlich wird durch den Unterdruck die Wassermenge in den Ausgleichsbehälter 12 gesaugt, die einer Ausdehnungsmenge entspricht, so dass sich die in Figur 2 gezeigte Wasserverteilung ergibt. Die Ausdehnungsmenge wird wieder vor dem Erwärmen des Kaltwassers dem Wassertank 1 entnommen. Der Ausgleichsbehälter 1 ist bis auf den oberen Innenraumbereich 36 mit Wasser befüllt und oberhalb eines Füllstandspiegels 38 im Wassertank 2 ist der Lauftraum 40 gebildet. Zudem sind der Zulaufkanal 14 und der Zulauf 2 vollständig mit dem Kaltwasser befüllt.

Anschließend beginnt wieder eine vorbeschriebene Erwärmung des Kaltwassers im Wassertank 2. Der Füllstandspiegel 38 steigt und der Luftraum 40 wird minimiert. Die sich im verkleinernden Luftraum 40 befindende Luft wird bei der Erwärmung über den Auslauf 6 zurück in die Außenumgebung abgegeben. Die Ausdehnungsmenge besetzt quasi den Luftraum 40, steigt jedoch nicht in den Wasserauslauf 6 empor. Der Warmwasserspeicher 1 ist wieder betriebsbereit und ein neuer Zapfvorgang kann beginnen.

Die Erfindung offenbart einen Warmwasserspeicher der Hausgerätetechnik mit einem Wassertank zur Aufnahme von zu erwärmenden Wasser und mit einem unelastischen Ausgleichsbehälter mit einem nicht-variablen Volumen zur Aufnahme einer Wassermenge, die sich beim Zapfstopp in einer am Auslauf angeschlossenen Armatur befindet, wobei der Ausgleichsbehälter gegenüber einer Außenumgebung des Wasserspeichers hermetisch abgeschlossen ist und mit einer zulaufseitigen Wasserstrahlpumpe in Fluidverbindung steht, wobei der Ausgleichsbehälter zusätzlich zur auslaufseitigen Wassermenge eine Wassermenge aufnimmt, die einer beim Erwärmen des Kaltwassers im Wassertank entstehenden Ausdehnungsmenge entspricht.

### Bezugszeichenliste

- 1: Warmwasserspeicher
- 2: Wassertank
- 4: Zulauf
- 6: Auslauf
- 8: Bodenwandung
- 10: Heizeinrichtung
- 12: Ausgleichsbehälter
- 14: Zulaufkanal
- 16: Fluidöffnung
- 18: Wasserstrahlpumpe
- 20: Bypassventil
- 22: Ventilkörper
- 24: Ventilfeder
- 26: Ventilsitz
- 28: Gehäuse
- 30: Innenraum
- 32: Bodenwand
- 34: Verbindungsöffnung
- 36: Innenraumbereich
- 38: Füllstandspiegel
- 40: Luftraum
- 42: Restmenge

## Patentansprüche

1. Warmwasserspeicher (1) für den häuslichen Gebrauch, mit einem Wassertank (2) zur Aufnahme von zu erwärmendem Wasser, und mit einem unelastischen Ausgleichsbehälter (12) zur Aufnahme einer Wassermenge, die sich beim Zapfstopp in einer am Auslauf (6) angeschlossenen Armatur befindet, und zur Aufnahme einer Wassermenge, die einer Ausdehnungsmenge beim Erwärmen des Kaltwassers im Wassertank (2) entspricht, **dadurch gekennzeichnet, dass** der Ausgleichsbehälter (12) gegenüber einer Außenumgebung des Warmwasserspeichers (1) hermetisch abgeschlossen ist und mit einer zulaufseitigen Wasserstrahlpumpe (18) so in Fluidverbindung steht, dass die Wasserstrahlpumpe eine Erzeugung eines Unterdrucks im Ausgleichsbehälter ermöglicht.

2. Warmwasserspeicher nach Anspruch 1, wobei der Ausgleichsbehälter (12) über eine bodennahe bzw. bodenseitige Verbindungsöffnung (34) mit der Wasserstahlpumpe (18) in Wirkverbindung steht.

3. Warmwasserspeicher nach Anspruch 1 oder 2, wobei die Wasserstrahlpumpe (18) in Kombination mit einem parallel geschalteten Bypassventil (20) einen Zulaufquerschnitt definiert.

4. Warmwasserspeicher nach Anspruch 1, 2 oder 3, wobei ein Auslauf (6) deckenseitig am Wassertank (2) ausgebildet und das Kaltwasser bodennah in den Wassertank (2) einströmt.

5. Warmwasserspeicher nach Anspruch 4, wobei eine Heizeinrichtung (10) zum Erwärmen des Kaltwassers bodennah angeordnet ist.

6. Warmwasserspeicher nach einem der vorhergehenden Ansprüche, wobei die auslaufseitige Wassermenge und die ausdehnungsbezogene Wassermenge bodennah aus dem Wassertank (2) zum Ausgleichbehälter (12) strömen.

7. Warmwasserspeicher nach Anspruch 6, wobei das in den Wassertank (2) einströmende Kaltwasser, die auslaufseitige Wassermenge und die ausdehnungsbezogene Wassermenge durch die gleiche Fluidöffnung (16) mit dem Wassertank (2) kommunizieren.

## Claims

1. Hot water storage appliance (1) for domestic use, having a water tank (2) for receiving water to be heated, and having a non-elastic compensation container (12) for receiving a water quantity, which, during a tapping stoppage, is situated in a fitting connected to the outflow (6), and for receiving a water quantity which corresponds to an expansion quantity during heating of the cold water in the water tank (2), **characterized in that** the compensation container (12) is hermetically sealed with respect to an external surroundings of the hot water storage appliance (1) and is in fluid communication with an inflow-side water jet pump (18) in such a way that the water jet pump allows the production of a negative pressure in the compensation container.

2. Hot water storage appliance according to Claim 1, wherein the compensation container (12) is in operative connection with the water jet pump (18) via a near-bottom or bottom-side connection opening (34).

3. Hot water storage appliance according to Claim 1 or 2, wherein the water jet pump (18), in combination with a bypass valve (20) connected in parallel, defines an inflow cross section.

4. Hot water storage appliance according to Claim 1, 2 or 3, wherein an outflow (6) is formed on the top side of the water tank (2) and the cold water flows near-bottom into the water tank (2).

5. Hot water storage appliance according to Claim 4, wherein a heating device (10) for heating the cold water is arranged near-bottom.

6. Hot water storage appliance according to one of the preceding claims, wherein the outflow-side water quantity and the expansion-related water quantity flow near-bottom from the water tank (2) to the compensation container (12).

7. Hot water storage appliance according to Claim 6, wherein the cold water flowing into the water tank (2), the outflow-side water quantity and the expansion-related water quantity communicate with the water tank (2) through the same fluid opening (16).

## Revendications

1. Accumulateur d'eau chaude (1) destiné à un usage domestique, avec un réservoir d'eau (2) destiné à contenir de l'eau à chauffer, et avec un réservoir d'équilibrage inélastique (12) destiné à contenir une quantité d'eau, qui se trouve lors de l'arrêt du prélèvement dans un robinet raccordé à la sortie (6), et destiné à contenir une quantité d'eau qui correspond à une quantité de dilatation lors du chauffage de l'eau froide dans le réservoir d'eau (2), **caractérisé en ce que** le réservoir d'équilibrage (12) est hermétiquement clos par rapport à un environnement extérieur de l'accumulateur d'eau chaude (1) et est en communication fluidique avec un éjecteur à eau d'entrée (18), de telle manière que l'éjecteur à eau permette la production d'une dépression dans le réservoir d'équilibrage.

2. Accumulateur d'eau chaude selon la revendication 1, dans lequel le réservoir d'équilibrage (12) est en communication active avec l'éjecteur à eau (18) par une ouverture (34) proche du fond ou située dans le fond.

3. Accumulateur d'eau chaude selon la revendication 1 ou 2, dans lequel l'éjecteur à eau (18) définit une section transversale d'alimentation en combinaison avec une soupape de dérivation (20) montée en parallèle.

4. Accumulateur d'eau chaude selon la revendication 1, 2 ou 3, dans lequel une sortie (6) est formée en plafond sur le réservoir d'eau (2) et l'eau froide pénètre à proximité du fond dans le réservoir d'eau (2).

5. Accumulateur d'eau chaude selon la revendication 4, dans lequel un dispositif de chauffage (10) est disposé à proximité du fond pour le chauffage de l'eau froide.

6. Accumulateur d'eau chaude selon l'une quelconque des revendications précédentes, dans lequel la quantité d'eau côté sortie et la quantité d'eau concernée par la dilatation s'écoulent à proximité du fond depuis le réservoir d'eau (2) vers le réservoir d'équilibrage (12).

7. Accumulateur d'eau selon la revendication 6, dans lequel l'eau froide pénétrant dans le réservoir d'eau (2), la quantité d'eau côté sortie et la quantité d'eau concernée par la dilatation communiquent avec le réservoir d'eau (2) par la même ouverture fluidique (16).
